# FASCICULE DE BREVET EUROPEEN

(11) **EP 3 939 727 B1**
(45) Date de publication et mention de la délivrance du brevet: **16.11.2022**
(21) Numéro de dépôt: 21182248.1
(22) Date de dépôt: 29.06.2021
(51) Int. Cl.: B23B 45/00, B25B 23/00, B25F 3/00

(54) **DISPOSITIF DE PERCAGE OU DE VISSAGE PORTABLE COMPRENANT UN COLLIER DE SERRAGE D'UNE TETE D'OUTIL AMOVIBLE**
TRAGBARE BOHR- ODER SCHRAUBVORRICHTUNG MIT EINEM SPANNRING FÜR EINEN ABNEHMBAREN WERKZEUGKOPF
PORTABLE DEVICE FOR DRILLING OR SCREWING COMPRISING A CLAMPING COLLAR FOR A REMOVABLE TOOL HEAD

(30) Priorité: 17.07.2020 FR 2007513
(43) Date de publication de la demande: 19.01.2022
(73) Titulaire: ETABLISSEMENTS GEORGES RENAULT, 44800 Saint Herblain (FR)
(72) Inventeur: POIRIER, Kevin, 44300 NANTES (FR); PITHON, Romain, 44360 LE TEMPLE DE BRETAGNE (FR)
(74) Mandataire: Vidon Brevets & Stratégie

(56) Documents cités:
- FR-A1- 2 274 406
- FR-A1- 3 025 125
- US-A- 3 724 237

## Description

### 1. Domaine de l'invention

Le domaine de l'invention est celui de l'outillage.

L'invention concerne plus particulièrement la conception et la réalisation des outils portatifs prévus pour réaliser un perçage ou ceux prévus pour exercer un vissage.

### 2. Art antérieur

Des outils portatifs de perçage sont couramment utilisés dans divers domaines comme par exemple dans celui de l'industrie aéronautique. Dans ce domaine, il reste encore une grande quantité de perçage qui est réalisée à l'aide de perceuses manuelles pour des raisons d'encombrement ou de coût d'outillage. Cela peut représenter jusqu'à 70% des perçages réalisés par un site de production.

Les perceuses motorisées, électriques ou pneumatiques, sont couramment mises en œuvre sur les structures avionnées pour réaliser diverses opérations et notamment les opérations :
- de perçage droit ou désaxé avec ou sans lubrification,
- d'agrandissement de perçage,
- de fraisurage,
- de contreperçage,
- d'alésage,
- d'ébavurage,
- d'épinglage,
- de vissage, et
- de lamage.

Toutefois, ces opérations s'effectuent bien souvent dans des environnements de travail restreints (exigus) et dans des conditions difficiles exposant les opérateurs à la poussière notamment. Ainsi, les interventions sont parfois situées dans des endroits difficilement accessibles ce qui est inconfortable pour l'opérateur. Certaines opérations nécessitent des efforts qui constituent une fatigue pour l'opérateur, jusqu'à éventuellement l'apparition de troubles musculo-squelettiques. L'opérateur est ainsi amené à orienter l'outil dans des directions diverses et variées, en fonction de l'emplacement de l'opération à effectuer. Ceci pénalise également la productivité.

L'évolution concurrentielle du secteur aéronautique impose de nouvelles exigences de cadence de production et d'amélioration de la productivité.

La nécessité d'augmenter la cadence de production nécessite de diminuer le temps dédié à chaque opération. L'opération de perçage manuel par exemple est une opération complexe qui dépend beaucoup des compétences de l'opérateur et qui peut amener de nombreux problèmes de non-respect de la qualité attendue (non-qualités).

Par conséquent, les constructeurs aéronautiques exigent désormais des moyens pour assister l'opération et la fiabiliser afin de réduire les non-qualités et ainsi augmenter la productivité. Ceci passe notamment par une amélioration de l'ergonomie des outils pour l'opérateur.

Plusieurs changements de têtes d'outils sont parfois nécessaires ce qui génère des pertes de temps.

Pour remédier à ce problème, le brevet FR 2 889 985 propose une solution de fixation rapide qui permet d'obtenir des gains de temps lors de l'assemblage de la tête d'outil sur le bloc moteur d'un ensemble d'outillage. La solution décrite met en œuvre un assemblage de type male-femelle dans lequel des billes immobilisent en rotation et translation une tête d'outil par rapport au bloc moteur d'un ensemble d'outillage. Plus précisément, les billes se déplacent radialement pour être en interférence avec les éléments mâles et femelles. Cet assemblage implique toutefois un jeu de montage (il s'agit d'emboitage) qui permet un désassemblage rapide. Ce jeu peut être préjudiciable (mouvement relatif autorise des chocs et jeu accentué). Or, dans les structures avionnés, les trous doivent être effectués avec des tolérances fines et il est donc nécessaire que le forêt de perçage tourne rond (jeu réduit).

FR 2 274 406 A1 divulgue un dispositif de perçage ou de vissage portable selon le préambule de la revendication 1.

### 3. Objectifs de l'Invention

La présente invention a donc pour but de faire évoluer l'état des techniques actuelles des perceuses manuelles afin de répondre aux défis techniques actuels imposés par la filière aéronautique.

Plus précisément, un objectif de l'invention est d'améliorer, dans au moins un mode de réalisation, la maniabilité, la sécurité d'utilisation, la capacité d'accès à des zones encombrées et l'ergonomie des dispositifs de perçage.

En particulier, selon au moins un mode de réalisation, un objectif de l'invention est de procurer un dispositif avec lequel l'assemblage de la tête d'outil sur le bloc moteur est notablement facilité par rapport à l'art antérieur.

Notamment, l'invention a pour objectif, selon au moins un mode de réalisation, de fournir un tel dispositif qui qui permette d'assurer efficacement le maintien de la tête d'outil dans la position angulaire souhaitée.

Un autre objectif de l'invention, selon au moins un mode de réalisation, est de fournir un tel dispositif qui soit fiable et efficace.

Un autre objectif de l'invention est de fournir un tel ensemble d'outillage qui soit simple de conception, facile à mettre en œuvre et peu coûteux à réaliser.

### 4. Présentation de l'Invention

Pour ceci, l'invention propose un dispositif de perçage ou de vissage portable comprenant un corps principal dans lequel est logé un bloc moteur, une tête d'outil comprenant une douille de réception d'un organe terminal rotatif et une interface de connexion de la tête d'outil sur le bloc moteur, ladite tête d'outil étant accouplée au bloc moteur de manière démontable par des moyens de fixation réversible comprenant un collier de serrage de ladite tête d'outil sur le bloc moteur, ledit collier de serrage étant mobile entre une position verrouillée ou fermée dans laquelle il coopère avec ledit bloc moteur et ladite tête d'outil pour maintenir ledit bloc moteur et ladite tête d'outil solidaires, et une position de libération ou ouverte dans laquelle il ne coopère pas avec ladite tête d'outil en sorte que ledit bloc moteur et ladite tête d'outil ne sont plus maintenus solidaires,
le dispositif comprenant un levier de verrouillage du collier de serrage, le levier de verrouillage étant mobile entre une position de fermeture dans laquelle il agit sur le collier de serrage pour le placer dans sa position verrouillée, et une position d'ouverture dans laquelle le collier de serrage peut prendre sa position de libération.

Selon l'invention, ledit collier comprend deux mâchoires articulées entre elles et un élément élastique relié d'une part à une extrémité libre d'une première mâchoire et d'autre part audit levier de verrouillage, ledit levier de verrouillage étant relié à une extrémité libre d'une deuxième mâchoire.

L'invention propose ainsi de fixer de façon réversible une tête d'outil sur un dispositif de perçage ou de vissage portable par le biais d'un collier de serrage qui est conçu pour permettre le maintien du corps de la tête d'outil par rapport au bloc moteur, une fois que la tête d'outil est emmanchée sur le bloc moteur par le biais d'une interface de connexion. Le levier de verrouillage du collier de serrage permet d'obtenir un dispositif de serrage ou de vissage qui est robuste, compact et facilement manipulable (ergonomique).

Selon un aspect particulier de l'invention, ledit levier de verrouillage comprend des moyens de réglage de la déformation de l'élément élastique dans la position verrouillée du collier de serrage.

Selon un aspect particulier de l'invention, le levier de verrouillage présente une came empêchant la fermeture dudit collier de serrage en cas de mauvais accouplement de la tête d'outil sur le bloc moteur.

Selon un aspect particulier de l'invention, le dispositif comprend un ressort de rappel exerçant un couple d'ouverture entre lesdites mâchoires de sorte que ces demières restent écartées en position de libération du collier de serrage.

Selon un aspect particulier de l'invention, le collier de serrage comprend au moins une vis de mise sous tension du ressort de rappel et de limitation de l'ouverture du collier en position de libération de ce dernier.

Selon un aspect particulier de l'invention, le dispositif comprend des moyens de maintien du collier de serrage sur le bloc moteur dans chacune des positions du collier de serrage. Ceci permet de conserver « prisonnier » le collier sur le corps de la perceuse.

Selon un aspect particulier de l'invention, le bloc moteur comprend une première bride d'accouplement radialement saillante et la tête d'outil porte sur son rebord périphérique une deuxième bride d'accouplement radialement saillante venant en vis-à-vis de la première bride lorsque ladite tête d'outil est accouplée sur le bloc moteur, le collier de serrage étant destiné à enserrer la première et la deuxième bride pour maintenir lesdites brides solidaires.

Avantageusement, le collier de serrage agit sur des brides circulaires portées par la tête d'outil et le bloc moteur respectivement.

Le fait que le collier de serrage intègre un élément élastique et applique une force radiale et axiale de serrage sur les brides, qui sont appliquées l'une sur l'autre, contribue à l'absence de jeu de l'assemblage de la tête d'outil sur le bloc moteur, contrairement à l'art antérieur.

Selon un aspect particulier de l'invention, la deuxième bride présente un chanfrein sur la face opposée à la face venant en vis-à-vis de la première bride, le collier de serrage présentent une rainure intérieure dont un bord périphérique est conique et destiné à venir en appui sur le chanfrein de la deuxième bride.

Selon un aspect particulier de l'invention, le dispositif est muni de moyens de reconnaissance de ladite tête comprenant :
- une étiquette électronique disposée dans la tête d'outil munie d'une première antenne,
- un lecteur d'étiquette électronique disposé dans le corps du dispositif muni d'une deuxième antenne.

Selon un aspect particulier de l'invention, lesdites antennes sont chacune constituées par un circuit imprimé multicouche.

Selon un aspect particulier de l'invention, la tête d'outil comprend des contacts électriques destinés à alimenter au moins un élément électrique monté sur ladite tête d'outil.

Selon un aspect particulier de l'invention, le dispositif comprend une interface de connexion du bloc moteur à des têtes d'outil de deux types différents dans lesquelles est susceptible de tourner un arbre de transmission du mouvement du moteur dudit bloc moteur.

L'interface de connexion est configurée de sorte à ce que le corps principal du dispositif de perçage ou de vissage est reliable de manière amovible des têtes d'outil interchangeables de deux types distincts.

Selon un aspect particulier de l'invention, l'interface de connexion comprend un porte satellite d'accouplement rotatif porté par le bloc moteur et destiné à coopérer avec une aiguille traversant l'arbre de transmission d'une tête d'outil du premier type.

Selon un aspect particulier de l'invention, l'interface de connexion comprend un arbre de sortie porté par le bloc moteur et entrainé de façon directe par le moteur, ledit arbre de sortie présentant à son extrémité six pans de type mâle destinés à coopérer une empreinte de section hexagonale de type femelle située à l'extrémité de l'arbre de transmission de la tête d'outil du deuxième type.

Un tel dispositif de perçage est donc flexible.

Grâce à la solution de l'invention, la fixation de la tête d'outil sur le dispositif de perçage ou de vissage permet notamment :
- une manipulation rapide et aisée,
- un porte à faux avant réduit,
- une lubrification de la tête d'outil.

### 5. Description des figures

D'autres caractéristiques et avantages de l'invention apparaîtront à la lecture de la description suivante de modes de réalisation particuliers, donnée à titre de simple exemple illustratif et non limitatif, et des dessins annexés parmi lesquels :
[Fig 1] la figure 1 est une vue partielle en perspective d'un dispositif de perçage conforme à l'invention et d'une tête d'outil séparés ;
[Fig 2] la figure 2 est une vue partielle en perspective du dispositif de perçage sur lequel est mise en place la tête d'outil, le collier de serrage étant en position ouverte ;
[Fig 3] la figure 3 illustre une vue partielle en perspective du dispositif de perçage sur lequel est verrouillée la tête d'outil, le collier de serrage étant en position fermée ;
[Fig 4] la figure 4 est une vue en coupe longitudinale du dispositif de perçage et d'une tête d'outil d'un premier type lorsqu'ils sont désassemblés ;
[Fig 5] la figure 5 est une vue en coupe longitudinale du dispositif de perçage et d'une tête d'outil d'un second type lorsqu'ils sont désassemblés ;
[Fig 6] la figure 6 est une vue en coupe longitudinale du dispositif de perçage et de la tête d'outil de la figure 4 après assemblage ;
[Fig 7] la figure 7 est une vue en coupe longitudinale du dispositif de perçage et de la tête d'outil de la figure 5 après assemblage;
[Fig 8] la figure 8 est une vue de face du dispositif de perçage sur lequel est montée la tête d'outil, le collier de serrage étant en position fermée ;
[Fig 9] la figure 9 est une vue en coupe longitudinale du dispositif de la figure 8 ;
[Fig 10] la figure 10 est une vue de détail de la figure 9 ;
[Fig 11] la figure 11 est une vue en coupe longitudinale du dispositif de perçage, le collier de serrage étant en position fermée ;
[Fig 12] la figure 12 est une vue en coupe longitudinale du dispositif, le collier de serrage étant en position ouverte ;
[Fig 13] la figure 13 est une vue en coupe transversale selon A-A du dispositif de perçage de la figure 15, le collier de serrage étant en position fermée;
[Fig 14] la figure 14 est une vue en coupe transversale selon A-A du dispositif de perçage de la figure 15, le collier de serrage étant en position ouverte ;
[Fig 15] la figure 15 est une vue en coupe longitudinale du dispositif de perçage;
[Fig 16] la figure 16 est une vue en perspective illustrant le collier de serrage partiellement retiré du dispositif de perçage ;
[Fig 17] la figure 17 est une vue de côté illustrant le collier de serrage totalement retiré du dispositif de perçage;
[Fig 18] la figure 18 est une vue de face du dispositif de perçage montrant la came du collier de serrage empêchant sa fermeture dans certains cas ;
[Fig 19] la figure 19 montre le réglage de la déformation du maillon élastique du collier de serrage ;
[Fig 20] la figure 20 montre de façon schématique l'étiquette électronique de la tête d'outil et le lecteur d'étiquette électronique du bloc moteur du dispositif de perçage ;
[Fig 21] la figure 21 est une vue de face de la tête d'outil portant une étiquette électronique ; [Fig 22] la figure 22 montre la géométrie particulière du collier de serrage ;
[Fig 23] la figure 23 montre un maillon du collier de serrage et sa géométrie particulière ;
[Fig 24] la figure 24 montre une tête d'outil ;
[Fig 25] la figure 25 montre un deuxième type de tête d'outil.

### 6. Description de modes de réalisation particuliers

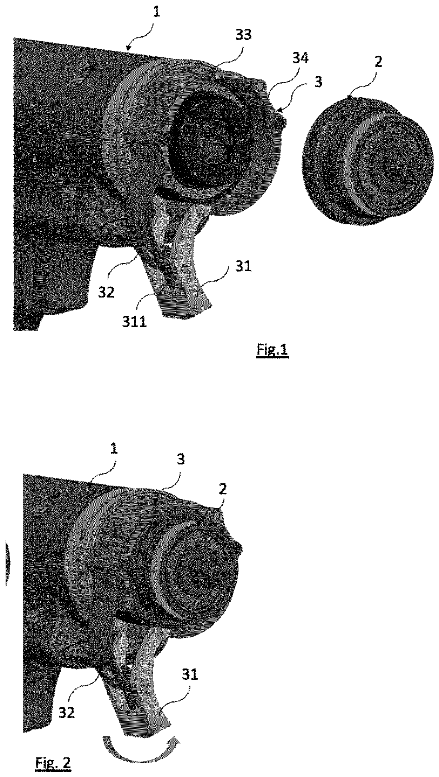

On présente en relation avec les figures 1 à 25 un exemple de mode de réalisation d'un dispositif de perçage selon l'invention. Il pourrait également s'agir d'un dispositif de vissage pouvant assurer la fonction de vissage ou les fonctions de vissage et de dévissage.

Ainsi que cela est représenté partiellement sur les figures 1 à 3 notamment, un tel dispositif comprend un corps ou carter principal 1 et un porte outil, ou tête d'outil, 2 amovible. Le corps principal 1 est ici de type poignée-pistolet (l'axe de la poignée forme un angle non nul avec l'axe de rotation de l'organe terminal - dans lequel la poignée s'étendra selon un axe incliné par rapport au reste du corps.). Il pourrait toutefois s'agir d'un carter longitudinal dont l'axe de la poignée est parallèle ou confondu avec l'axe de rotation de l'organe terminal, ou tout autre type de carter (la poignée s'étendra alors dans le prolongement du reste du corps).

Le porte outil 2 amovible est solidarisé à l'extrémité avant du corps principal 1 par une interface de connexion et des moyens de fixation réversible qui seront décrits plus en détail par la suite. Des portes outils de formes différentes pourront alternativement être solidarisés au corps principal. Il pourra par exemple s'agir d'un porte outil de type tête d'angle à 90° (axe de rotation de l'outil coupant perpendiculaire à l'axe de rotation du moteur), d'un porte outil de type renvoi d'axe (axe de rotation de l'outil coupant parallèle et distant de l'axe de rotation du moteur), ou d'un porte outil de type tête d'angle à plus de 90° (axe de rotation de l'outil coupant formant un angle de plus de 90° avec l'axe de rotation du moteur) ou autre.

Le corps principal 1 loge un bloc moteur comprenant un moteur électrique (non visible). Il s'agit préférentiellement d'un moteur synchrone à aimant permanent. Il pourra toutefois s'agir de tout autre type de moteur électrique.

Le corps principal1 loge des moyens de contrôle du moteur (non visibles). Ces moyens de contrôle, connu en soit et donc non décrit en détail, permettent de contrôler le moteur en régulation de vitesse.

Le corps principal 1 loge des moyens autonomes d'alimentation électrique du moteur (non visibles). Ces moyens comprennent ici un onduleur et une batterie. Il pourrait s'agir de tout autres moyens autonomes d'alimentation comme une capacité ou autre. Il pourrait de manière alternative s'agit de moyens d'alimentation électrique filaires (II comprend dans ce cas à son extrémité arrière des moyens de raccordement à un réseau d'alimentation électrique).

Le dispositif comprend une gâchette d'actionnement et des moyens de commande du moteur en fonction de la position de la gâchette (non visibles), la gâchette étant mobile entre au moins :
- une position de repos dans laquelle le moteur est à l'arrêt ;
- une position d'actionnement dans laquelle le moteur est entrainé par les moyens de commande selon une fréquence de rotation prédéterminée.

De façon avantageuse, le dispositif comprend une interface de connexion du bloc moteur à des têtes d'outil de deux types différents.

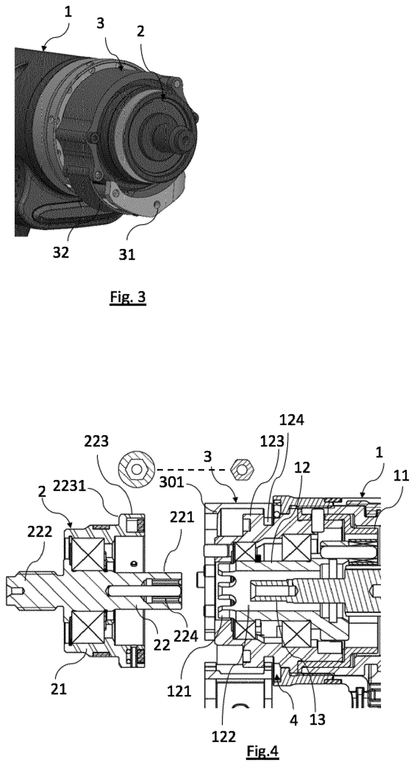

La figure 4 est une vue en coupe longitudinale du dispositif de perçage et d'une tête d'outil d'un premier type lorsqu'ils sont désassemblés.

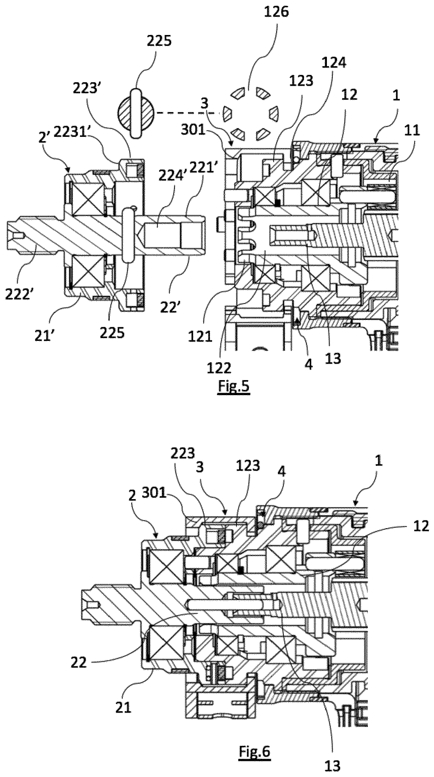

La figure 5 est une vue en coupe longitudinale du dispositif de perçage et d'une tête d'outil d'un second type lorsqu'ils sont désassemblés.

On distingue sur ces figures 4 et 5 que le bloc moteur 11 loge un porte satellite 12 avec des encoches à son extrémité 121 présentant un logement intérieur creux 122 dans lequel s'étend un arbre central 13. L'arbre central 13, monté mobile en rotation, est relié directement au moteur du bloc moteur (ratio de 1). Le porte satellite 12, montée mobile en rotation, est relié au moteur électrique indirectement au moyen d'une transmission par train(s) épicycloïdal(s). La transmission du mouvement entre le porte satellite 12 et le moteur du dispositif de perçage est donc indirecte (elle présente ici un ratio de réduction de 3,21).

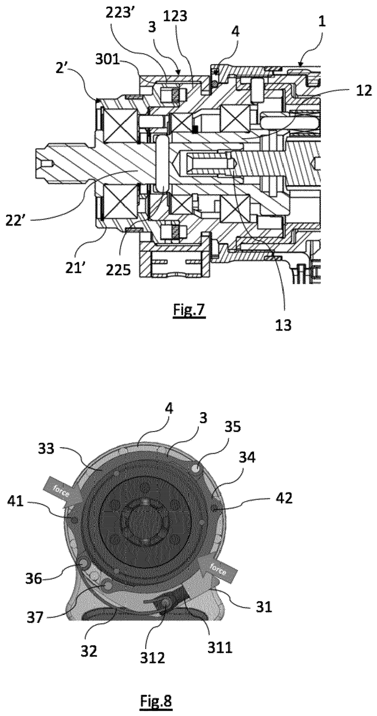

La tête d'outil 2, 2' est un élément amovible comprenant un corps 21,21' et un arbre de transmission 22, 22' susceptible d'être entraîné en rotation à l'intérieur du corps 21, 21' (figures 4 à 7 notamment). Le porte satellite 12 ou l'arbre central 13 sont chacun destinés à coopérer avec l'extrémité arrière 221, 221' de l'arbre de transmission 22, 22' de la tête d'outil 2, 2' pour entraîner ce dernier en rotation. L'arbre de transmission 22, 22' de la tête d'outil 2, 2' fait saillie à l'extrémité arrière du corps 21, 21' de la tête d'outil 2, 2' de façon à pénétrer partiellement le bloc moteur en vue d'être solidarisé en rotation avec l'arbre central 13 du bloc moteur (figures 4 et 6) ou bien avec le porte satellite 12 du bloc moteur (figures 5 et 7).

La nature de la jonction pour la transmission du mouvement est donc différente, la vitesse de rotation de l'arbre de transmission 22 de la tête d'outil 2 pour la jonction ou connexion des figures 4 et 6 étant plus forte mais le couple plus faible que la jonction des figures 5 et 7.

Dans l'exemple illustré sur les figures 4 et 6 (premier type de jonction), l'arbre central 13 présente une extrémité de forme hexagonale à six pans formant élément mâle et l'arbre de transmission 22 présente à son extrémité arrière 221 un évidement, ou empreinte, 224 de section hexagonale correspondante formant élément femelle pour loger l'élément mâle. L'arbre de transmission 22 est apte à être entrainé en rotation par l'arbre central 13 et est libre en rotation par rapport à le porte satellite 12 d'accouplement.

Dans l'autre exemple illustré sur les figures 5 et 7 (deuxième type de jonction), l'engrènement du porte satellite 12 avec l'arbre de transmission 22' est assuré par une aiguille 225 qui traverse l'arbre de transmission 22' et qui coopère avec des encoches 126 ménagées dans le porte satellite 12. L'arbre de transmission 22' est apte à être entrainé en rotation par le porte satellite 12 d'accouplement et est libre en rotation par rapport à l'arbre central 13.

La tête d'outil 2, 2' présente une douille de réception d'un organe terminal rotatif ou outil (tel un embout de perçage ou de vissage), non représenté, de sorte que l'outil est solidarisé à l'extrémité avant 222, 222' de la tête d'outil 2, 2' de façon amovible. L'arbre de transmission 22, 22' est destiné à transmettre le mouvement en rotation du moteur du bloc moteur 11 à la douille de la tête d'outil 2, 2' et donc à l'outil.

On comprend donc qu'une première opération pour l'assemblage de la tête d'outil 2, 2' avec le bloc moteur 11 consiste à amener l'arbre de transmission 22, 22' de la tête d'outil 2 dans le bloc moteur de façon qu'il s'engrène avec l'arbre central 13 ou le porte satellite 12 du bloc moteur 11, selon que la tête d'outil est du premier type ou du deuxième type respectivement. Les moyens de fixation réversible de la tête d'outil 2, 2' sur le corps principal 1 comprennent un collier de serrage 3 à verrouillage/déverrouillage rapide qui a pour objectif de permettre la fixation ou le démontage rapide de la tête d'outil 2, 2' sur le corps principal 1, que la tête d'outil soit du premier type ou du deuxième type.

Ce collier de serrage 3 est monté sur une embase ou bride 4 annulaire du corps principal 1. Une fois la tête d'outil mise en place sur le corps principal 1, une deuxième opération pour verrouiller la tête d'outil 2, 2' sur le corps principal 1 consiste à fermer le collier de serrage 3 en agissant sur un levier de verrouillage 31 du collier.

La figure 2 montre le dispositif de perçage sur lequel est mise en place la tête d'outil 2, le collier de serrage 3 étant en position ouverte, la figure 3 illustrant le dispositif de perçage sur lequel est verrouillée la tête d'outil 2, le collier de serrage 3 étant en position fermée.

Ainsi, en deux temps on serre la tête sur la perceuse et on immobilise la tête sur celle-ci. Inversement, lorsque l'on souhaite retirer la tête d'outil, on déverrouille le collier de serrage 3 puis on retire la tête.

Dans le mode de réalisation décrit sur les différentes figures, le collier de serrage 3 prend la forme d'un anneau ouvert comprenant deux mâchoires de serrage 33, 34 réunies de façon articulée (figures 8 et 16 à 19 notamment). Les deux extrémités libres des mâchoires de serrage 33, 34 sont disposées en regard et sont munies de moyens de serrage prenant la forme d'un maillon élastique 32 et d'un levier de verrouillage 31 couplé de façon articulée au maillon élastique 32. Ce dernier est ici une lame élastique qui a capacité à se déformer.

Les deux mâchoires de serrage 33, 34 prennent la forme de segments/coques/brides en forme de moitié d'arc reliés/joints par une charnière et mobiles l'une par rapport à l'autre entre une position de libération dans laquelle elles ne retiennent pas la tête d'outil 2 sur le corps principal 1 et une position de verrouillage dans laquelle elles enserrent la bride de la tête d'outil 2 sur le corps principal 1.

Le levier de fermeture ou de verrouillage 31, qui est monté mobile en rotation sur le collier de serrage 3 est articulé sur un axe de pivotement 37 à l'extrémité libre de l'une des mâchoires (la mâchoire 34 en l'occurrence). Un premier axe de pivotement 36 relie l'extrémité libre de la première mâchoire 33 et le maillon élastique 32, un deuxième axe de pivotement 312 reliant le maillon élastique 32 et le levier de verrouillage 31, et un troisième axe de pivotement 37 reliant le levier de verrouillage 31 et l'extrémité libre de la deuxième mâchoire 34.

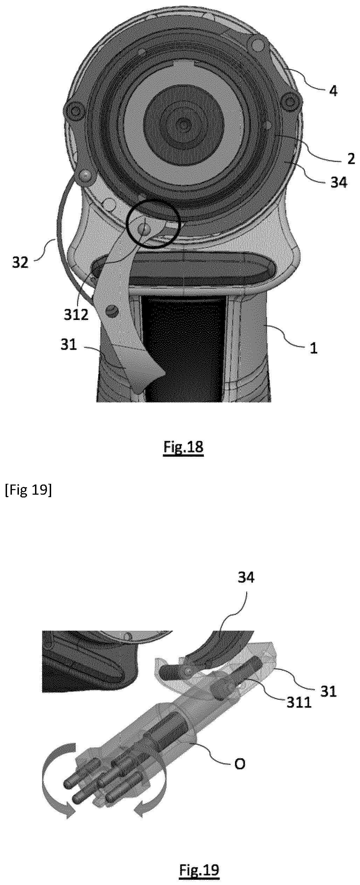

Le maillon élastique 32 est également relié en pivotement à un axe de pivotement 312 porté par le levier de verrouillage 31, l'axe de pivotement 312 étant situé sensiblement à égale distance des extrémités du levier de verrouillage 31. Le levier de verrouillage 31 intègre une vis 311 de réglage de la déformation du maillon élastique 32 dans sa position verrouillée et donc de la force de serrage du collier de sorte à serrer plus ou moins fortement la tête d'outil 2 sur le corps principal 1 (figure 19). Un élément d'outillage O permet d'agir sur la vis 311 de réglage et de régler la tension du maillon élastique 32, et plus particulièrement la déformation de l'élément élastique dans la position verrouillée du collier.

Le maillon élastique 32 est ici constitué par une lame. Le levier de verrouillage 31 lorsqu'il est actionné pour verrouiller le porte outil 2 sur le corps principal 1 vient se positionner dans une position repliée contre une face extérieure de la mâchoire de serrage 34 et plaque également le maillon élastique vers le porte outil 2.

En d'autres termes, le levier de verrouillage 31 et le maillon élastique 32 permettent de presser les mâchoires de serrage 33, 34 l'une vers l'autre en exerçant une force prédéterminée entre un état de libération où les extrémités libres des mâchoires de serrage 33, 34 sont écartées et un état de verrouillage dans lequel les extrémités libres des mâchoires de serrage 33, 34 sont rapprochées.

De façon avantageuse, comme visible sur les figures 4 à 7, l'extrémité avant du bloc moteur 11 porte sur son rebord périphérique une première bride 123 radialement saillante et l'extrémité arrière de la tête d'outil 2 porte sur son rebord périphérique une deuxième bride 223 radialement saillante venant en vis-à-vis de la première bride 123 lorsque ladite tête d'outil 2 est accouplée/rapportée sur le bloc moteur 11. Comme cela est visible sur les figures 6 et 7, le collier de serrage 3 est destiné à enserrer la première et la deuxième bride 123, 223 pour maintenir ces deux brides solidaires. On distingue sur les figures 6, 7, 9 et 10 que la deuxième bride 223 présente un chanfrein 2231 sur la face opposée à la face venant en vis-à-vis de la première bride 123. Ce chanfrein 2231 est compris entre 50° et 80°. On distingue également que les mâchoires du collier de serrage 3 présentent une rainure intérieure dont un bord 301 périphérique est conique. Ce bord conique 301 circulaire est destiné à venir en appui sur le chanfrein 2231 circulaire de la deuxième bride 223.

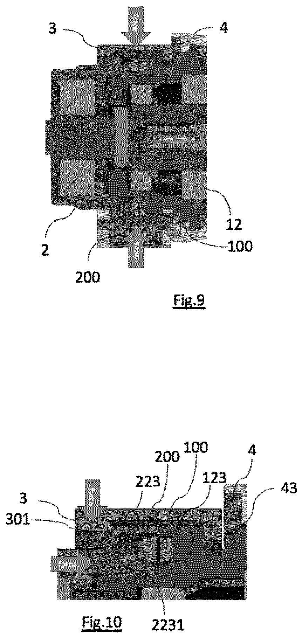

Comme précisé auparavant, le montage de la tête d'outil 2 sur le corps principal 1 se fait en deux temps : une fois la tête d'outil 2 mise en place ou rapportée sur le bloc moteur 11 de perceuse par emmanchement, l'extrémité arrière 221 du corps 21 pénétrant le logement intérieur creux 122 de la porte satellite 12 du bloc moteur et étant en prise soit avec l'arbre central 13 ou la porte satellite 12, le collier de serrage 3 est fermé en agissant sur le levier de verrouillage 31 du collier. Le maillon élastique 32 est mis sous tension ce qui créé une force de serrage axiale (illustrée par les flèches des figures 8, 9 et 10) par le biais de la surface conique intérieure des mâchoires du collier venant en appui sur le chanfrein 2231 de la bride 223 de la tête d'outil 2. La force radiale de serrage illustrée sur ces figures est transformée en force axiale (représentée par une flèche sur la figure 10).

Le collier de serrage 3 est monté sur le corps principal 1 par vissage, et plus précisément par le biais de vis 41, 42 de fixation. Le collier de serrage 3 peut être retiré une fois que les vis 41, 42 sont dévissées. On note que le collier de serrage 3 est maintenu sur le corps principal 1 en position de serrage ou verrouillage, ainsi qu'en en position de libération, par le biais d'un rebord périphérique circulaire coopérant avec une rainure 124 circulaire ménagée à la périphérie du corps principal 1.

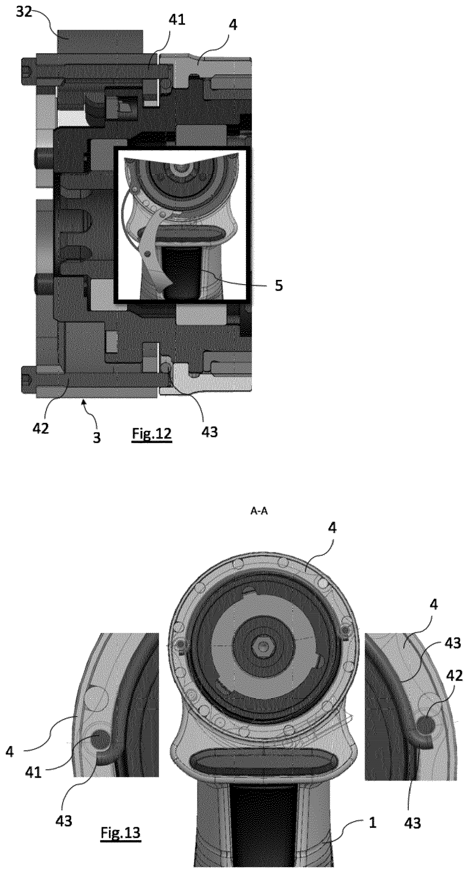

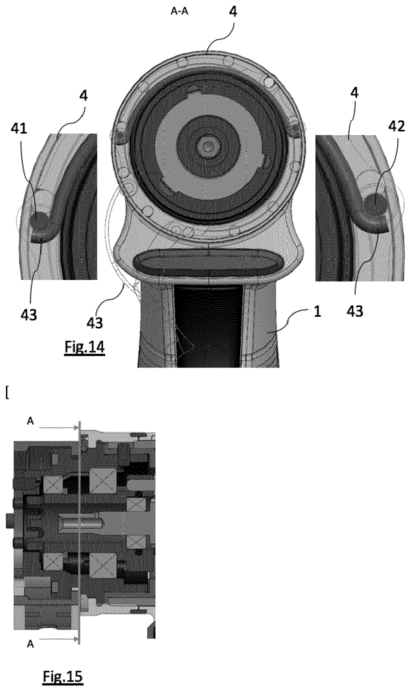

Par ailleurs, l'embase 4 intègre un ressort de rappel 43 de forme annulaire exerçant un couple d'ouverture entre les mâchoires de serrage 33, 34 de sorte que ces dernières restent écartées en position de libération du collier de serrage 3. Ceci permet de faciliter le retrait ou l'insertion de la tête d'outil 2 hors ou sur le corps principal 1 respectivement. Les extrémités de ce ressort de rappel 43 sont courbées/cintrées et sont en contact avec les vis 41, 42 lors de l'ouverture du collier de serrage 3, suite au déverrouillage. Dans la position fermée du collier de serrage 3 (figure 13), le ressort de rappel 43 comprimé n'est pas fonctionnel. Dans la position ouverte du collier de serrage 3 (figure 14), le ressort de rappel 43 applique une force sur les vis 41, 42 pour maintenir ouvertes les mâchoires de serrage 33, 34. Ce ressort de rappel 43 permet donc une ouverture automatique et un maintien en position ouverte du collier de serrage 3.

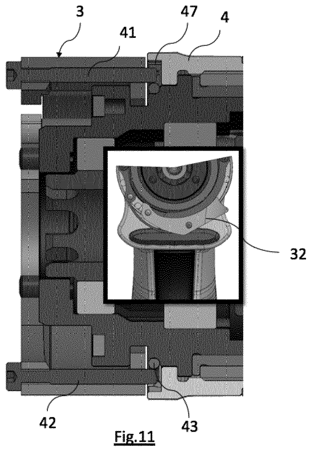

La figure 11 est une vue en coupe longitudinale du dispositif lorsque le collier de serrage 3 est verrouillé ou en position de serrage montrant l'extrémité des vis 41 et 42 de fixation du collier sur l'embase qui sont logées dans un alésage ménagé dans l'embase 4. Comme souligné précédemment, le collier de serrage 3 est maintenu sur le corps principal 1 en position de serrage ou verrouillage par le biais d'un rebord périphérique circulaire coopérant avec la rainure 124 circulaire ménagée à la périphérie du corps principal 1 (figure 4).

Lorsque le collier de serrage 3 est déverrouillé et ouvert, les vis 41 et 42 se déplacent radialement vers l'extérieur et viennent buter contre la paroi de l'alésage 47 (figure 12). Le collier de serrage 3 ne peut ainsi pas être séparé de l'embase 4 lorsqu'il est déverrouillé.

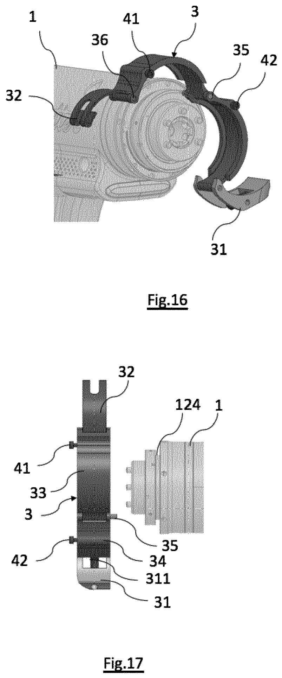

Les figures 16 et 17 sont des vues en perspective et de côté du collier de serrage 3 lorsqu'il est démonté du bloc moteur 11. L'axe 35 d'articulation des mâchoires de serrage 33, 34 est destiné à coopérer avec un logement d'indexation de l'embase 4.

Comme illustré sur la figure 81, le levier de verrouillage 31 comprend à son extrémité intérieure une came 312 empêchant la fermeture du collier de serrage 3 en cas de mauvais enfoncement de la tête d'outil 2 dans le corps principal 1. Cette came 312 oblige donc l'utilisateur à assembler correctement le porte outil 2 sur le corps principal 1 et évite toute détérioration du maillon élastique 32.

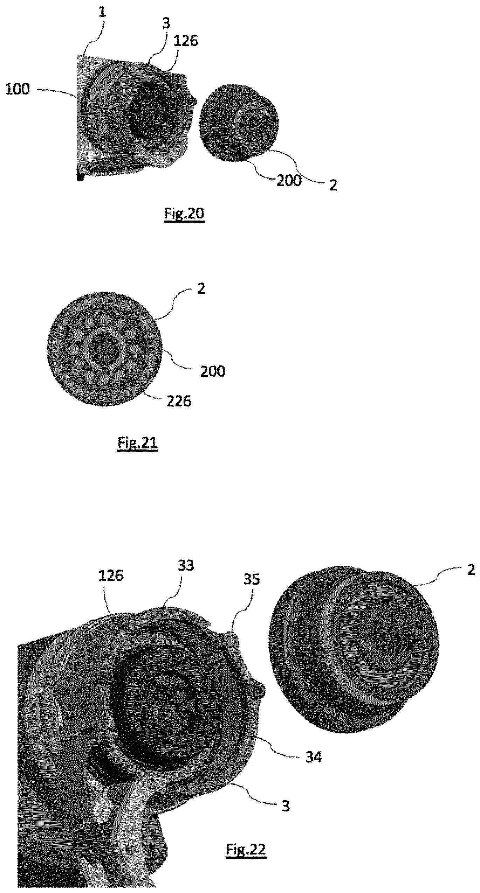

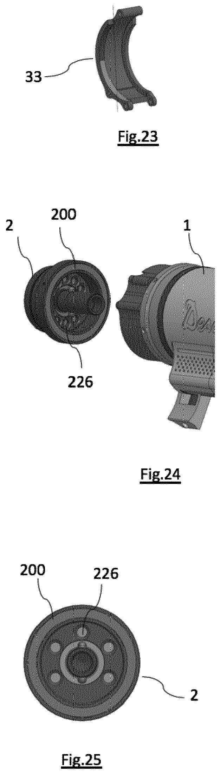

Comme visible sur les figures 20, 21, 24 et 25, la partie amovible (tête d'outil 2) présente des éléments d'indexage angulaire (de détrompage) qui permettent une immobilisation en rotation de la tête d'outil 2 sur le corps principal 1. Une pluralité de pions 126 (cinq dans l'exemple des figures 20 et 25) portés par l'extrémité avant du corps principal 1 et répartis circulairement, sont destinés à venir se loger dans des trous 226 de forme complémentaire répartis circulairement dans la tête d'outil 2. Ces pions 126 et trous 226 assurent en partie la reprise de couple et l'orientation de la tête d'outil 2 vis-à-vis du corps principal 1.

On note que sur les figures 21, 24 et 25, la tête d'outil est du deuxième type décrit précédemment.

Sur les figures 22 et 23, la surface intérieure du rebord des mâchoires de serrage 33, 34 est modifiée de part et d'autre de l'axe d'articulation 35 de sorte à faciliter le dégagement et l'insertion de la tête d'outil 2 dans le collier. Plus précisément, l'usinage intérieur des mâchoires de serrage 33, 34 n'est pas concentrique avec la surface extérieure de ces mâchoires. Usinages concentriques à l'axe de l'outil lorsque la boucle est ouverte.

Comme illustré notamment sur les figures 9, 10, 20, 21, 24 et 25, le dispositif de perçage intègre un moyen de reconnaissance de la tête d'outil 2 impliquant :
- une étiquette électronique, qui est par exemple du type RFID dans la tête d'outil 2 qui comprend classiquement une mémoire stockant au moins une information d'identification de ladite tête d'outil 2 et une première antenne 200, et
- un lecteur d'étiquette électronique, qui est par exemple du type RFID, dans le dispositif de perçage munie d'une deuxième antenne 100 disposée en regard de la première antenne 200 lorsque la tête d'outil 2 est accouplée sur le dispositif de perçage.

Les première et deuxième antennes 200, 100 sont constituées chacune par un PCB multicouche.

L'antenne 100 circulaire est logé dans le fond d'un logement intérieur creux de la bride 123 de manière coaxiale à l'arbre de sortie 12. Elle est ainsi protégée de l'environnement extérieur. L'antenne 200 circulaire est logée dans le fond d'un logement intérieur creux constitué par un alésage de la bride 223 de la tête d'outil 2 de manière coaxiale à l'arbre de transmission 22.

Le corps principal 1 loge une unité centrale comme par exemple un microprocesseur. Le lecteur d'étiquette électronique est relié à l'unité centrale. Il permet non seulement de lire les informations enregistrées dans l'étiquette électronique de la tête d'outil 2, mais également d'y enregistrer des données. En d'autres termes, il peut communiquer de manière bidirectionnelle avec l'étiquette électronique de la tête d'outil 2.

Le collier de serrage de l'invention est de structure simple, de production économique et peut donc servir de raccord rapide.

Dans une variante de réalisation, la deuxième bride 223 peut ne pas présenter de chanfrein sur le bord contre lequel vient se plaquer le collier de serrage 3. Ce bord peut être à angle droit.

Selon une approche particulière, la tête d'outil comprend des contacts électriques destinés à alimenter au moins un élément électrique monté sur ladite tête d'outil. Il peut s'agir de capteurs de mesure (capteur d'orientation ou un capteur de couple par exemple), de sources lumineuses (LED).

Par ailleurs, les brides peuvent servir d'interface à de la connectique pour fluide ou connectique électrique.

Un joint d'étanchéité torique peut être disposé entre les deux brides formant raccord étanche du fait de l'effort axial résultant du verrouillage du collier de serrage. Un fluide de lubrification de foret dans un perçage peut ainsi circuler depuis le corps d'outil vers la tête (le foret de perçage présentant des canaux internes de lubrification depuis l'arrière du foret vers les arêtes de coupe). Ce raccord peut alternativement être destiné à alimenter en air comprimé un dispositif de clampage/bridage de la perceuse sur un une pièce à percer ou un gabarit.

La tête d'outil peut intégrer une transmission par roues libres permettant deux vitesses de rotation de l'outil différentes, l'activation de l'une ou l'autre desdits vitesses étant obtenue par l'inversion du sens de rotation du moteur comme cela a déjà été décrit dans l'état de l'art, en particulier dans le document FR 2 913 361.

## Revendications

1. Dispositif de perçage ou de vissage portable comprenant un corps principal (1) dans lequel est logé un bloc moteur (11), une tête d'outil (2) comprenant une douille de réception d'un organe terminal rotatif et une interface de connexion de la tête d'outil (2) sur le bloc moteur (11),
ladite tête d'outil (2) étant accouplée au bloc moteur (11) de manière démontable par des moyens de fixation réversible comprenant un collier de serrage (3) de ladite tête d'outil (2) sur le bloc moteur (11), ledit collier de serrage (3) étant mobile entre une position verrouillée ou fermée dans laquelle il coopère avec ledit bloc moteur (11) et ladite tête d'outil (2) pour maintenir ledit bloc moteur (11) et ladite tête d'outil (2) solidaires, et une position de libération ou ouverte dans laquelle il ne coopère pas avec ladite tête d'outil (2) en sorte que ledit bloc moteur (11) et ladite tête d'outil (2) ne sont plus maintenus solidaires,
le dispositif comprenant un levier de verrouillage (31) du collier de serrage (3), le levier de verrouillage (31) étant mobile entre une position de fermeture dans laquelle il agit sur le collier de serrage (3) pour le placer dans sa position verrouillée, et une position d'ouverture dans laquelle le collier de serrage (3) peut prendre sa position de libération, **caractérisé en ce que** ledit collier de serrage (3) comprend deux mâchoires (33, 34) articulées entre elles et un élément élastique (32) relié d'une part à une extrémité libre d'une première mâchoire et d'autre part audit levier de verrouillage (31), ledit levier de verrouillage (31) étant relié à une extrémité libre d'une deuxième mâchoire.

2. Dispositif selon la revendication 1 dans lequel ledit levier de verrouillage (31) comprend des moyens de réglage de la déformation de l'élément élastique (32) dans la position verrouillée du collier de serrage (3).

3. Dispositif selon la revendication 1 ou 2, dans lequel le levier de verrouillage présente une came (312) empêchant la fermeture dudit collier de serrage (3) en cas de mauvais accouplement de la tête d'outil (2) sur le bloc moteur (11).

4. Dispositif selon l'une des revendications 1 à 3, comprenant un ressort de rappel (43) exerçant un couple d'ouverture entre lesdites mâchoires (33, 34) de sorte que ces dernières restent écartées en position de libération du collier de serrage (3).

5. Dispositif selon la revendication 4, dans lequel le collier de serrage (3) comprend au moins une vis (311) de mise sous tension du ressort de rappel (43) et de limitation de l'ouverture du collier de serrage (3) en position de libération de ce dernier.

6. Dispositif selon l'une des revendications 1 à 5 comprenant des moyens de maintien du collier de serrage (3) sur le bloc moteur (11) dans chacune des positions du collier de serrage (3).

7. Dispositif selon l'une des revendications 1 à 6 dans lequel le bloc moteur (11) comprend une première bride (123) d'accouplement radialement saillante et la tête d'outil (2) porte sur son rebord périphérique une deuxième bride (223) d'accouplement radialement saillante venant en vis-à-vis de la première bride (123) lorsque ladite tête d'outil (2) est accouplée sur le bloc moteur (11), le collier de serrage (3) étant destiné à enserrer la première et la deuxième bride (123, 223) pour maintenir lesdites brides solidaires.

8. Dispositif selon la revendication 7 dans lequel la deuxième bride (223) présente un chanfrein (2231) sur la face opposée à la face venant en vis-à-vis de la première bride (123), le collier de serrage (3) présentent une rainure intérieure dont un bord périphérique est conique et destiné à venir en appui sur le chanfrein (2231) de la deuxième bride (223).

9. Dispositif selon l'une des revendications 1 à 8 muni de moyens de reconnaissance de ladite tête d'outil (2) comprenant :
- une étiquette électronique disposée dans la tête d'outil (2) munie d'une première antenne (200),
- un lecteur d'étiquette électronique disposé dans le corps principal (1) du dispositif muni d'une deuxième antenne (100).

10. Dispositif selon la revendication 9 dans lequel lesdites antennes (100, 200) sont chacune constituées par un circuit imprimé multicouche.

11. Dispositif selon l'une des revendications 1 à 10 dans lequel la tête d'outil (2) comprend des contacts électriques destinés à alimenter au moins un élément électrique monté sur ladite tête d'outil (2).

12. Dispositif selon l'une des revendications 1 à 11 comprenant une interface de connexion du bloc moteur (11) à des têtes d'outil de deux types différents dans lesquelles est susceptible de tourner un arbre de transmission du mouvement du moteur dudit bloc moteur (11).

13. Dispositif selon la revendication 12 dans lequel l'interface de connexion comprend un porte satellite (12) d'accouplement rotatif porté par le bloc moteur (11) et destiné à coopérer avec une aiguille (225) traversant l'arbre de transmission (22') d'une tête d'outil du premier type.

14. Dispositif selon la revendication 13 dans lequel l'interface de connexion comprend un arbre de sortie (13) porté par le bloc moteur (11) et entrainé de façon directe par le moteur, ledit arbre de sortie (13) présentant à son extrémité six pans de type mâle destinés à coopérer une empreinte (224) de section hexagonale de type femelle située à l'extrémité de l'arbre de transmission (22) de la tête d'outil du deuxième type.

## Patentansprüche

1. Tragbare Bohr- oder Schraubvorrichtung, die einen Hauptkörper (1), in dem ein Motorblock (11) untergebracht ist, einen Werkzeugkopf (2), der eine Buchse zur Aufnahme eines drehbaren Endorgans und eine Schnittstelle zur Verbindung des Werkzeugkopfs (2) auf dem Motorblock (11) umfasst,
wobei der Werkzeugkopf (2) durch Mittel zur umkehrbaren Befestigung, die einen Ring (3) zum Spannen des Werkzeugkopfs (2) auf dem Motorblock (11) umfassen, abmontierbar an den Motorblock (11) gekoppelt ist, wobei der Spannring (3) zwischen einer verriegelten oder geschlossenen Position, in der er mit dem Motorblock (11) und dem Werkzeugkopf (2) zusammenwirkt, um den Motorblock (11) und den Werkzeugkopf (2) fest verbunden zu halten, und einer Freigabe- oder Öffnungsposition beweglich ist, in der er nicht mit dem Werkzeugkopf (2) zusammenwirkt, derart dass der Motorblock (11) und der Werkzeugkopf (2) nicht fest verbunden gehalten werden,
wobei die Vorrichtung einen Hebel (31) zur Verriegelung des Spannrings (3) umfasst, wobei der Verriegelungshebel (31) zwischen einer geschlossenen Position, in der er auf den Spannring (3) einwirkt, um ihn in seiner verriegelten Position zu platzieren, und einer geöffneten Position beweglich ist, in welcher der Spannring (3) seine Freigabeposition einnehmen kann, **dadurch gekennzeichnet, dass** der Spannring (3) zwei Backen (33, 34), die untereinander gelenkig sind, und ein elastisches Element (32) umfasst, das einerseits mit einem freien Ende einer ersten Backe und andererseits mit dem Verriegelungshebel (31) verbunden ist, wobei der Verriegelungshebel (31) mit einem freien Ende einer zweiten Backe verbunden ist.

2. Vorrichtung nach Anspruch 1, wobei der Verriegelungshebel (31) Mittel zur Regelung der Verformung des elastischen Elements (32) in der verriegelten Position des Spannrings (3) umfasst.

3. Vorrichtung nach Anspruch 1 oder 2, wobei der Verriegelungshebel einen Nocken (312) aufweist, der das Schließen des Spannrings (3) im Fall einer schlechten Kopplung des Werkzeugkopfs (2) auf dem Motorblock (11) verhindert.

4. Vorrichtung nach einem der Ansprüche 1 bis 3, die eine Rückstellfeder (43) umfasst, die ein Öffnungsmoment zwischen den Backen (33, 34) ausübt, derart dass diese letzteren in der Freigabeposition des Spannrings (3) beabstandet bleiben.

5. Vorrichtung nach Anspruch 4, wobei der Spannring (3) mindestens eine Schraube (311) zum Unterspannungsetzen der Rückstellfeder (43) und zur Begrenzung der Öffnung des Spannrings (3) in der Freigabeposition dieses Letzteren umfasst.

6. Vorrichtung nach einem der Ansprüche 1 bis 5, die Mittel zum Halten des Spannrings (3) auf dem Motorblock (11) in jeder der Positionen des Spannrings (3) umfasst.

7. Vorrichtung nach einem der Ansprüche 1 bis 6, wobei der Motorblock (11) einen ersten Kopplungsflansch (123) umfasst, der radial hervorsteht, und der Werkzeugkopf (2) an seinem Umfangsrand einen zweiten Kopplungsflansch (223) trägt, der radial hervorsteht und dem ersten Flansch (123) zum Gegenüberliegen kommt, wenn der Werkzeugkopf (2) auf dem Motorblock (11) gekoppelt ist, wobei der Spannring (3) dazu bestimmt ist, den ersten und den zweiten Flansch (123, 223) zu umspannen, um die Flansche fest verbunden zu halten.

8. Vorrichtung nach Anspruch 7, wobei der zweite Flansch (223) eine Abschrägung (2231) auf der Seite aufweist, die dem ersten Flansch (123) zum Gegenüberliegen kommt, wobei der Spannring (3) eine innere Rille umfasst, von der ein Umfangsrand konisch ist und dazu bestimmt ist, auf der Abschrägung (2231) des zweiten Flansches (223) in Auflage zu gelangen.

9. Vorrichtung nach einem der Ansprüche 1 bis 8, die mit Mitteln zur Erkennung des Werkzeugkopfs (2) versehen ist, die Folgendes umfassen:
- ein in dem Werkzeugkopf (2) angeordnetes elektronisches Etikett, das mit einer ersten Antenne (200) versehen ist,
- einen im Hauptkörper (1) der Vorrichtung angeordneten elektronischen Etikettenleser, der mit einer zweiten Antenne (100) versehen ist.

10. Vorrichtung nach Anspruch 9, wobei die Antennen (100, 200) jeweils aus einer mehrschichtigen gedruckten Schaltung bestehen.

11. Vorrichtung nach einem der Ansprüche 1 bis 10, wobei der Werkzeugkopf (2) elektrische Kontakte umfasst, die dazu bestimmt sind, mindestens ein elektrisches Element, das auf dem Werkzeugkopf (2) montiert ist, mit Strom zu versorgen.

12. Vorrichtung nach einem der Ansprüche 1 bis 11, die eine Schnittstelle zur Verbindung des Motorblocks (11) mit zwei verschiedenen Typen von Werkzeugköpfen umfasst, in denen eine Welle zur Übertragung der Bewegung des Motors des Motorblocks (11) sich drehen kann.

13. Vorrichtung nach Anspruch 12, wobei die Verbindungsschnittstelle einen Planetenradträger (12) zur drehbaren Kopplung umfasst, der von dem Motorblock (11) getragen wird und dazu bestimmt ist, mit einem Stift (225) zusammenzuwirken, der die Antriebswelle (22') eines Werkzeugkopfs vom ersten Typ durchquert.

14. Vorrichtung nach Anspruch 13, wobei die Verbindungsschnittstelle eine Abtriebswelle (13) umfasst, die von dem Motorblock (11) getragen wird und direkt von dem Motor angetrieben wird, wobei die Abtriebswelle (13) an ihrem Ende sechs Kanten vom Typ Außensechskant aufweist, die dazu bestimmt sind, mit einer Aussparung (224) mit sechseckigem Querschnitt vom Typ Innensechskant zusammenzuwirken, die sich am Ende der Antriebswelle (22) des Werkzeugkopfs vom zweiten Typ befindet.

## Claims

1. A portable drilling or screwing device comprising a main body (1) in which is housed a motor unit (11), a tool head (2) comprising a socket for receiving a rotary end member and an interface for connecting the tool head (2) on the motor block (11),
said tool head (2) being removably coupled to the motor block (11) by reversible fastening means comprising a collar (3) for clamping said tool head (2) on the motor block (11), said clamping collar (3) being movable between a locked or closed position in which it cooperates with said motor block (11) and said tool head (2) to hold said motor block (11) and said tool head (2) together, and a release or open position in which it does not cooperate with said tool head (2) so that said motor block (11) and said tool head (2) are no longer held together,
the device comprising a locking lever (31) of the clamping collar (3), the locking lever (31) being movable between a closure position in which it acts on the clamping collar (3) to place it in its locked position, and an opening position in which the clamping collar (3) could take on its release position,
**characterised in that** said clamping collar (3) comprises two jaws (33, 34) hinged together and an elastic element (32) connected on the one hand to a free end of a first jaw and on the other hand to said locking lever (31), said locking lever (31) being connected to a free end of a second jaw.

2. The device according to claim 1, wherein said locking lever (31) comprises means for setting the deformation of the elastic element (32) in the locked position of the clamping collar (3).

3. The device according to claim 1 or 2, wherein the locking lever has a cam (312) preventing the closure of said clamping collar (3) in the event of poor coupling of the tool head (2) on the motor block (11) .

4. The device according to one of claims 1 to 3, comprising a return spring (43) exerting an opening torque between said jaws (33, 34) so that the latter remain spaced apart in the release position of the clamping collar (3).

5. The device according to claim 4, wherein the clamping collar (3) comprises at least one screw (311) for tensioning the return spring (43) and for limiting the opening of the clamping collar (3) in the release position of the latter.

6. The device according to one of claims 1 to 5, comprising means for holding the clamping collar (3) on the motor block (11) in each of the positions of the clamping collar (3).

7. The device according to one of claims 1 to 6, wherein the motor block (11) comprises a first radially projecting coupling flange (123) and the tool head (2) carries on its peripheral edge a second radially projecting coupling flange (223) lying opposite the first flange (123) when said tool head (2) is coupled on the motor block (11), the clamping collar (3) being intended to clasp the first and second flanges (123, 223) to hold said flanges together.

8. The device according to claim 7, wherein the second flange (223) has a chamfer (2231) on the face opposite to the face lying opposite the first flange (123), the clamping collar (3) has an internal groove, one peripheral edge of which is conical and intended to bear on the chamfer (2231) of the second flange (223).

9. The device according to one of claims 1 to 8, provided with means for recognising said tool head (2) comprising:
- an electronic tag arranged in the tool head (2) provided with a first antenna (200),
- an electronic tag reader arranged in the main body (1) of the device provided with a second antenna (100) .

10. The device according to claim 9, wherein each of said antennas (100, 200) consists of a multilayer printed circuit.

11. The device according to one of claims 1 to 10, wherein the tool head (2) comprises electrical contacts intended to power at least one electrical element mounted on said tool head (2).

12. The device according to one of claims 1 to 11, comprising an interface for connecting the motor block (11) to tool heads of two different types in which a shaft for transmitting the movement of the motor of said motor block (11) could rotate.

13. The device according to claim 12, wherein the connection interface comprises a rotary coupling planet carrier (12) carried by the motor block (11) and intended to cooperate with a needle (225) passing through the transmission shaft (22') of a tool head of the first type.

14. The device according to claim 13, wherein the connection interface comprises an output shaft (13) carried by the motor block (11) and driven directly by the motor, said output shaft (13) having at its male-type hex end intended to cooperate with an indentation (224) with a female type hexagonal section located at the end of the transmission shaft (22) of the tool head of the second type.
